# EUROPÄISCHE PATENTANMELDUNG

(11) **EP 4 015 288 A1**
(43) Veröffentlichungstag der Anmeldung: **22.06.2022**
(21) Anmeldenummer: 21206511.4
(22) Anmeldetag: 04.11.2021
(51) Int. Cl.: B60L 53/14, B60L 53/63, B60L 53/67, B60L 53/68

(54) **VERFAHREN ZUR BEREITSTELLUNG EINES LASTMANAGEMENTSYSTEMS**

(30) Priorität: 21.12.2020 DE 102020134467
(71) Anmelder: Innogy eMobility Solutions GmbH, 44139 Dortmund (DE)
(72) Erfinder: Diekert, Jens, 45257 Essen (DE); Kledewski, Ingo, 44319 Dortmund (DE)
(74) Vertreter: Gottschald Patentanwälte Partnerschaft mbB

(57) **Zusammenfassung**

Die Erfindung betrifft ein Verfahren zur Bereitstellung eines Lastmanagementsystems (1) für zumindest eine Ladestation (100) zur Aufladung von Elektrofahrzeugen, wobei die nachfolgenden Schritte durchgeführt werden:
- Bereitstellen zumindest eines Ladepunkts (110) der zumindest einen Ladestation (100), wobei der zumindest eine Ladepunkt (110) jeweils als eine Schnittstelle für die Aufladung ausgeführt ist,
- Bereitstellen eines Nachrichtenvermittlers (200) für eine Zuordnung der zumindest einen Ladestation (100) und/oder des zumindest einen Ladepunkts (110) jeweils zu wenigstens einem zugehörigen Thema (300), um wenigstens einen Befehl (310) für ein Lastmanagement in Abhängigkeit von der Zuordnung an die Ladestation (100) zu vermitteln.

## Beschreibung

Die vorliegende Erfindung betrifft ein Verfahren zur Bereitstellung eines Lastmanagementsystems. Ferner bezieht sich die Erfindung auf ein Lastmanagementsystem sowie entsprechende Computerprogramme zur Ausführung des Verfahrens.

Es ist bekannt, dass Lastmanagementsysteme für Ladestationen eingesetzt werden. Ein Lastmanagement erfolgt dabei grundsätzlich, um elektrische Energienetze nicht zu überlasten. Weiter ist für die Etablierung des sogenannten Internet der Dinge (loT) die Verwendung des MQTT-Protokolls (Message Queuing Telemetry Transport Protokoll) bekannt. MQTT basiert auf einer Publisher-Subscriber Architektur. Bei einer solchen Architektur ist ein sogenannter "Message Broker" vorgesehen, welcher in der Regel mehrere Topics umfasst, wobei jedes Topic ein bestimmten Verzeichnis, d. h. eine Adresse, besitzt. Ein Gerät, wie beispielsweise eine Ladestation, oder auch ein Ladepunkt der Ladestation, kann dann Nachrichten und insbesondere Dateien zu einem bestimmten Topic hochladen, auch als "publishen" bezeichnet, wenn eine Kommunikationsverbindung zwischen dem Message Broker und diesem Gerät vorhanden ist. Ein weiteres Gerät, welches ebenfalls mit dem Message Broker kommunikationstechnisch verbunden ist, kann sich ein bestimmtes Topic abonnieren, auch als "subscriben" bezeichnet. Wenn das weitere Gerät sich auf einem bestimmten Topic abonniert und ein anderes Gerät eine Nachricht bzw. Datei zu diesem Topic hochlädt, sendet der Message Broker automatisch aufgrund des Abonnements des Topics die hochgeladene Nachricht bzw. Datei zum weiteren Gerät. In diesem Zusammenhang kann auch von einem Vermitteln von Nachrichten gesprochen werden, sodass der Message Broker nachfolgend auch allgemeiner als Nachrichtenvermittler bezeichnet wird.

In der Schrift US 10,199,863 B2 wird ein Steuersystem für Photovoltaikanlagen offenbart, welches auf einer Publisher-Subscriber Architektur basiert.

Die Konfiguration und/oder der Betrieb eines Lastmanagementsystems sind häufig noch technisch aufwendig. Bei einem herkömmlichen Lastmanagement für Ladestationen kann es zum einen komplex sein, eine Vielzahl von Ladestationen zu einem Ladestationskomplex zu verändern. Zum anderen kann es technisch problematisch sein, bei einer Vielzahl von Ladestationen, welche alle ein Teil eines Lastmanagement sind, auf eine Zustandsänderung einer einzelnen Ladestation zu reagieren.

Es ist daher eine Aufgabe der vorliegenden Erfindung, die voranstehend beschriebenen Nachteile zumindest teilweise zu beheben. Insbesondere ist es eine Aufgabe, ein modulares Lastmanagementsystem bereitzustellen, welches effektiv verändert werden kann.

Die voranstehende Aufgabe wird gelöst durch ein Verfahren mit den Merkmalen des Anspruchs 1, ein Lastmanagementsystem mit den Merkmalen des Anspruchs 10 sowie durch ein Computerprogramm mit den Merkmalen des Anspruchs 15, ein weiteres Computerprogramm mit den Merkmalen des Anspruchs 12 und ein weiteres Computerprogramm mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Lastmanagementsystem sowie den erfindungsgemäßen Computerprogrammen, und jeweils umgekehrt, sodass bezüglich der Offenbarung zu den einzelnen Erfindungsaspekten stets wechselseitig Bezug genommen wird bzw. werden kann.

Die Aufgabe wird insbesondere gelöst durch ein Verfahren zur Bereitstellung eines Lastmanagementsystems für zumindest eine, bevorzugt zumindest zwei oder zumindest drei oder zumindest vier oder zumindest fünf, insbesondere elektrische, Ladestation(en) zur Aufladung von Elektrofahrzeugen. Hierbei ist insbesondere vorgesehen, dass die nachfolgenden Schritte durchgeführt werden, vorzugsweise nacheinander in der angegebenen Reihenfolge oder in beliebiger Reihenfolge, wobei die Schritte auch wiederholt durchgeführt werden können:
- Bereitstellen zumindest eines, insbesondere elektrischen, Ladepunkts der zumindest einen Ladestation, und vorteilhafterweise von zumindest zwei oder zumindest drei oder zumindest vier Ladepunkten jeder Ladestation, wobei der zumindest eine Ladepunkt bzw. die Ladepunkte jeweils als eine Schnittstelle für die Aufladung von Elektrofahrzeugen ausgeführt ist,
- Bereitstellen eines, insbesondere elektronischen, Nachrichtenvermittlers für eine Zuordnung der zumindest einen Ladestation und/oder des zumindest einen Ladepunkts jeweils zu wenigstens einem zugehörigen Thema, um wenigstens einen Befehl für ein Lastmanagement in Abhängigkeit von der Zuordnung an die zumindest eine Ladestation zu vermitteln.

Das Lastmanagementsystem kann zumindest eine Ladestation mit zumindest einem Ladepunkt und den Nachrichtenvermittler, wie einen Server, umfassen. Weiter kann das Lastmanagementsystem eine, insbesondere elektronische, Verarbeitungseinheit, wie eine Recheneinheit, umfassen. Die Ladestation kann entsprechend zumindest einen Ladepunkt umfassen, an welchem ein Elektrofahrzeug geladen werden kann. Die Ladestation kann kommunikationstechnisch mit dem Nachrichtenvermittler verbunden sein und/oder der Nachrichtenvermittler kann kommunikationstechnisch mit der Verarbeitungseinheit verbunden sein. Es kann im Lastmanagementsystem eine direkte kommunikationstechnische Verbindung zwischen der jeweiligen Ladestation, insbesondere dessen Ladepunkt(e), und der Verarbeitungseinheit verhindert sein. In anderen Worten kann es verhindert sein, dass die jeweilige Ladestation und die Verarbeitungseinheit sich direkt Nachrichten übermitteln.

Für jeden Ladepunkt der Ladestation und/oder für jede Ladestation kann wenigstens ein Thema vorgesehen sein. Das jeweilige Thema ist bspw. im Nachrichtenvermittler vorgesehen, z. B. in einer digitalen, nicht-flüchtig gespeicherten Zuordnungstabelle des Nachrichtenvermittlers gespeichert. Nachfolgend wird noch detaillierter auf eine Ausführung eingegangen, bei welcher ein erstes Thema für einen Status eines Ladepunkts und ein zweites Thema für einen Befehl für den Ladepunkt vorgesehen ist. Für jeden Ladepunkt der Ladestation kann dann entsprechend ein erstes und ein zweites Thema vorgesehen sein. Dabei ist es möglich, dass nur ein einziges erstes und/oder nur ein einziges zweites Thema pro Ladepunkt vorgesehen ist, und/oder dass kein erstes Thema mehrfach verschiedenen Ladepunkten zugewiesen ist und/oder kein zweites Thema mehrfach verschiedenen Ladepunkten zugewiesen ist. In anderen Worten kann eine "Eins zu Eins"-Beziehung zwischen den ersten Themen und den Ladepunkten und/oder zwischen den zweiten Themen und den Ladepunkten bestehen. Die Ladepunkte können daher unterschiedlichen ersten Themen und/oder unterschiedlichen zweiten Themen zugeordnet sein.

Ein Nachrichtenvermittler im Sinne der Beschreibung kann insbesondere auch als ein "Message Broker" bezeichnet werden. Der Nachrichtenvermittler kann als ein Server, also eine zentrale Datenverarbeitungsanlage, ausgeführt sein. Es kann möglich sein, dass jeder Ladepunkt bzw. jede Ladestation mittels des Nachrichtenvermittlers ein Abonnement für das Thema einträgt, für welches der Ladepunkt bzw. die Ladestation die Befehle empfangen möchte. Dies hat den Vorteil, dass die Zuordnung des zumindest einen Ladepunkts bzw. der Ladestation zu dem jeweiligen Thema über das Abonnement dezentral durch die Ladepunkte bzw. Ladestationen erfolgen kann. Jeder Ladepunkt bzw. jede Ladestation kann ein eigenes Thema haben, und es kann für jeden Ladepunkt bzw. jede Ladestation ein eigenes Thema vorgesehen sein. Das voranstehend beschriebene, durch den Ladepunkt bzw. die Ladestation abonnierte Thema ist insbesondere ein befehlsbezogenes Thema, nachfolgend auch als "Befehls-Topic" oder als "zweites Thema" bezeichnet. Es kann wenigstens oder genau ein weiteres Thema pro Ladepunkt bzw. Ladestation vorgesehen sein kann, bspw. das statusbezogene Thema, auch als "Status-Topic" oder als "erstes Thema" bezeichnet. Jeder Ladepunkt bzw. jede Ladestation kann somit auch seinen eigenen Status-Topic haben, und es kann für jeden Ladepunkt bzw. jede Ladestation ein eigenes Status-Topic vorgesehen sein. Das Status-Topic kann, im Gegensatz zum Befehls-Topic, nicht durch den Ladepunkt bzw. die Ladestation abonniert werden, sondern der Ladepunkt bzw. die Ladestation kann stattdessen einen Status zu dem Status-Topic veröffentlichen. Die Verwendung von Status-Topics ermöglicht es, dass durch die Vermittlung der Befehle durch den Nachrichtenvermittler nicht nur eine Steuerung der Ladepunkte möglich ist, sondern dass durch die zusätzliche Vermittlung des Status, also von Status-Nachrichten durch den Nachrichtenvermittler, auch eine Regelung der Ladepunkte bzw. Ladestationen für das Lastmanagement erfolgen kann.

Der zumindest eine Ladepunkt kann jeweils als eine Schnittstelle für die Aufladung von Elektrofahrzeugen ausgeführt sein, mit welcher zur selben Zeit nur ein Elektrofahrzeug aufgeladen werden kann. Eine der Ladestationen kann dabei jeweils ein oder mehrere Ladepunkte aufweisen. Der Ladepunkt kann optional als ein Schnellladepunkt ausgeführt sein. Weiter kann der Ladepunkt ein Ladekabel und/oder einen elektrischen Anschluss aufweisen, um elektrisch mit einem Batteriemanagementsystem und/oder einer Batterie eines Elektrofahrzeuges verbunden zu werden.

Der Nachrichtenvermittler kann bspw. ein Computerprogramm aufweisen, um die Vermittlung von Nachrichten, insbesondere wenigstens eines Befehls und/oder wenigstens eines Status, durchzuführen. Weiter kann der Nachrichtenvermittler wenigstens einen Datenspeicher und/oder eine Datenbank aufweisen, um die Zuordnung nicht-flüchtig zu speichern und/oder für das Computerprogramm abrufbar zu machen.

Das Lastmanagement kann als ein lokales Lastmanagement ausgeführt sein, um mit dem Ziel durchgeführt werden, jeden Netzanschlusspunkt ideal zu nutzen, also die maximale Leistung bereitzustellen. Die Leistung kann z. B. durch den Energieversorger für mehrere Ladestationen begrenzt sein. Gleichwohl kann je nach Auslastung für die Ladepunkte dieser Ladestationen die bereitgestellte, maximale Leistung an die Gesamtbelastung angepasst werden. Damit soll die gesamte zur Verfügung stehende Leistung ausgenutzt werden. Um dieses Lastmanagement zu ermöglichen, können die Befehle an die Ladestationen für die Ladepunkte übertragen werden, welche die maximal verfügbare Leistung an dem Ladepunkt definieren.

Es kann weiter auch ein Befehl vorgesehen sein, welcher das Lastmanagement deaktiviert, also den Ladepunkt aus dem Lastmanagementsystem entfernt. Bspw. ist zu bestimmten Zeiten (insbesondere nachts) kein Lastmanagement notwendig. Das Lastmanagement kann dann über diesen Befehl deaktiviert werden.

Es kann möglich sein, dass durch den Nachrichtenvermittler eine Vermittlung eines Befehls in Abhängigkeit von der Zuordnung durch die folgenden Schritte durchführt wird:
- Empfangen eines Befehls, insbesondere von einer Verarbeitungseinheit, wobei der Befehl wenigstens einem der Themen zugeordnet ist,
- Vergleichen des zugeordneten Themas des Befehls mit der Zuordnung der Ladestationen bzw. der Ladepunkte, um ein Vergleichsergebnis zu erhalten,
- Übertragen des Befehls an denjenigen Ladepunkt bzw. diejenige Ladestation, welcher bzw. welche gemäß dem Vergleichsergebnis dem gleichen Thema zugeordnet ist.
Die voranstehenden Themen sind zweite Themen, also befehlsbezogene Themen.

Es kann möglich sein, dass mehrere Ladepunkte bzw. Ladestationen und somit auch mehrere befehlsbezogene Themen vorgesehen sind, da die Ladepunkte bzw. die Ladestationen unterschiedlichen der befehlsbezogenen (zweiten) Themen zugeordnet sein können. Ferner können die Ladepunkte bzw. die Ladestationen auch unterschiedlichen statusbezogenen (ersten) Themen zugeordnet sein.

Der Nachrichtenvermittler kann eine Zuordnungstabelle aufweisen, in welcher die Zuordnung der Ladepunkte bzw. Ladestationen (im Sinne von Abonnementen) zu dem jeweiligen Thema eingetragen ist. Weiter kann es möglich sein, dass die Verarbeitungseinheit sich in einem Energiesparmodus befindet und erst dann den Energiesparmodus verlässt und den Befehl generiert und an den Nachrichtenvermittler aussendet, wenn dies extern getriggert wird. Das Triggern kann bspw. durch eine Veränderung eines Status-Topic erfolgen.

Der Nachrichtenvermittler kann ferner separat von der Verarbeitungseinheit ausgeführt sein, und somit selbst nicht die Aufgabe übernehmen, die Nachrichten mit Befehlen und/oder Status zu generieren. In anderen Worten kann der Nachrichtenvermittler dediziert zur Vermittlung von Nachrichten ausgeführt sein. Der Nachrichtenvermittler kann Nachrichten bspw. über ein Netzwerk wie ein WLAN (Wireless Local Area Network) oder Internet übertragen.

Dieses Lastmanagementsystem kann modular ausgeführt sein, insbesondere weil die Verarbeitungseinheit funktional vom Nachrichtenvermittler getrennt ist. Die Verarbeitungseinheit kann rein für die Ausführung eines Lastmanagementalgorithmus verantwortlich sein. Der Nachrichtenvermittler kann die Aufgabe besitzen, die notwendigen Nachrichten wie Befehle und/oder Status der Ladestation und der Verarbeitungseinheit zur Verfügung zu stellen. Wenn die Verarbeitungseinheit das erste Thema eines Ladepunkts im Lastmanagementsystem abonniert hat, kann die Verarbeitungseinheit automatisch jede Statusänderung eines Ladepunkts empfangen und dementsprechend effektiv auf einzelne Ereignisse reagieren.

Außerdem ist es von Vorteil, wenn mehrere Ladepunkte und/oder mehrere Ladestationen bereitgestellt werden, insbesondere mindestens zwei oder mindestens vier oder mindestens sechs Ladestationen mit jeweils mindestens zwei oder mindestens drei oder mindestens vier Ladepunkten. Weiter kann durch den Nachrichtenvermittler für jeden der Ladepunkte ein eigenes zugehöriges, insbesondere erstes, Thema bereitgestellt werden und dem jeweiligen Ladepunkt zugeordnet werden. Dies hat den Vorteil, dass ein umfangreiches Lastmanagement ermöglicht wird.

Darüber hinaus ist es bei dem erfindungsgemäßen Verfahren denkbar, dass eine, insbesondere elektronische, Verarbeitungseinheit bereitgestellt wird, wobei durch die Verarbeitungseinheit der wenigstens eine Befehl jeweils einem der Themen zugeordnet wird, um den jeweiligen Befehl zu diesem Thema zu veröffentlichen. In anderen Worten kann die Verarbeitungseinheit eine Nachricht in der Form des Befehls erzeugen, wobei der Befehl einem bestimmten Thema zugeordnet wird. Durch die Zuordnung zu dem Thema wird festgelegt, für welchen Ladepunkt bzw. für welche Ladestation der Befehl vorgesehen ist. Die Zuordnung zu dem Thema adressiert auf diese Weise den konkreten Ladepunkt bzw. die konkrete Ladestation. Es kann sodann der veröffentlichte Befehl über den Nachrichtenvermittler an diejenige Ladestation übertragen werden, welche den dem Thema zugeordneten Ladepunkt aufweist, um diesen Ladepunkt entsprechend dem veröffentlichten Befehl zu betreiben. In einer Zuordnungstabelle des Nachrichtenvermittlers ist hierfür bspw. für jedes Thema eine Kommunikations-Adresse des Ladepunkts bzw. seiner Station angegeben.

Die Verarbeitungseinheit kann als eine Recheneinheit ausgeführt sein, welche insbesondere mit dem Nachrichtenvermittler direkt zur Datenübertragung verbunden ist und/oder mit dem wenigstens einen Ladepunkt nicht direkt zur Datenübertragung verbunden ist und/oder nur indirekt über den Nachrichtenvermittler zur Datenübertragung verbunden ist. In anderen Worten kann die Kommunikation zwischen der Verarbeitungseinheit und dem Nachrichtenvermittler unmittelbar und/oder zwischen der Verarbeitungseinheit und dem Ladepunkt nur mittelbar über den Nachrichtenvermittler erfolgen.

Ein weiterer Vorteil im Rahmen der Erfindung ist erzielbar, wenn die zumindest eine Ladestation und/oder der zumindest eine Ladepunkt, und insbesondere eine Verarbeitungseinheit, jeweils als Kommunikationsteilnehmer eines Kommunikationssystems ausgeführt sind, auf denen jeweils eine oder mehrere Publisher-Anwendungen und/oder eine oder mehrere Subscriber-Anwendungen ausgeführt werden. Hierbei ist der Vorteil, dass eine sehr hohe Modularität bereitgestellt werden kann. Die Erfindung kann also auf der Verwendung eines an sich bekannten Nachrichtenübermittlungsmechanismus basieren, dem Publish-Subscribe-Nachrichtenübermittlungsmechanismus. "Publish" steht für "Veröffentlichen", "Subscribe" steht für "Abonnieren". Mittels des Publish-Subscribe-Nachrichtenübermittlungsmechanismus können Subscriber-Anwendungen Informationen in Form von Nachrichten von Publisher-Anwendungen empfangen. Diesbezüglich ist eine Nachricht im Sinne der Erfindung beispielsweise eine Einheit von Daten zum Austausch zwischen Anwendungsprogrammen, also bspw. der Befehl und/oder Status. Eine Publisher-Anwendung kann insbesondere auch als ein "Veröffentlicher" bezeichnet werden. Eine Subscriber-Anwendung kann insbesondere als ein "Abonnent" bezeichnet werden.

Die Kommunikation zwischen den Kommunikationsteilnehmern kann vorteilhafterweise mithilfe eines MQTT-Protokolls durchgeführt werden. Dieses Protokoll ist heutzutage in einem hohen Maß verfügbar. So können relativ günstige Nachrichtenvermittler, also Message Broker, für eine Anwendung der Erfindungsidee verwendet werden. In einer Ausführungsform kann das MQTT-Protokoll über eine Datentransfer-Nachricht eines Open Charge Point Protocol (OCPP) realisiert werden. Für eine Datentransfer-Nachricht für das OCPP der Version 1.6 sei auf https://www.oasis-open.org/committees/download.php/58944/ocpp-1.6.pdf, Abschnitt 5.6 verwiesen.

Ein Thema im Sinne der Beschreibung kann auch durch den englischsprachigen Begriff "Topic" ersetzt oder mit diesem bezeichnet werden.

Weiter ist im Rahmen der Erfindung denkbar, dass durch die Verarbeitungseinheit der wenigstens eine Befehl zu dem wenigstens einen Thema veröffentlicht wird, und insbesondere als Reaktion auf die Veröffentlichung der Nachrichtenvermittler den wenigstens einen veröffentlichten Befehl an diejenige Ladestation überträgt, die und/oder deren Ladepunkt auf dieses Thema abonniert ist. Somit kann die Ladestation bzw. der Ladepunkt selbst ein Subscriber für das Thema sein, um die für den Ladepunkt relevanten Befehle zu erhalten.

Es ist ferner denkbar, dass eine Konfigurationseinheit bereitgestellt wird, um die Zuordnung der zumindest einen Ladestation und/oder des zumindest einen Ladepunkts zu dem zugehörigen Thema initial durchzuführen. Es kann damit vorgesehen sein, dass eine Konfigurationseinheit im Sinne eines Konfigurationstools das Abonnement des zumindest einen Ladepunktes für das Thema einträgt. Dies hat den Vorteil, dass die Zuordnung des zumindest einen Ladepunkts zu dem jeweiligen Thema über das Abonnement zentral und ladepunktübergreifend durch die Konfigurationseinheit erfolgen kann.

Bevorzugt ist es im Rahmen der Erfindung vorgesehen, dass durch den Nachrichtenvermittler die Zuordnung der zumindest einen Ladestation und/oder des zumindest einen Ladepunkts zu einem ersten Thema erfolgt, um über das erste Thema einen Status der Ladestation und/oder des Ladepunkts zu vermitteln. Das erste Thema eines Ladepunkts betrifft somit den Status des Ladepunkts. Der dazugehörige Ladepunkt kann bspw. Zustandsdaten des Ladepunkts (insbesondere die aktuelle Ladeleistung und/oder den aktuellen Ladestrom und/oder die Information, ob und wie ein Elektrofahrzeug mit dem Ladepunkt verbunden ist) mittels des ersten Status veröffentlichen. Die Verarbeitungseinheit kann das erste Thema eines jeden Ladepunkts, welcher im Lastmanagement berücksichtigt werden soll, abonniert haben.

Es kann weiter möglich sein, dass eine Verarbeitungseinheit bereitgestellt wird, welche den Befehl zugeordnet zu einem zweiten Thema veröffentlichen, wobei vorteilhafterweise die Veröffentlichung des Befehls durch die vorangegangene Vermittlung des Status getriggert wird. Gemäß einer Möglichkeit kann die Verarbeitungseinheit nur dann aufgerufen werden, wenn eine neue Statusnachricht zu einem ersten Thema eines Ladepunkts, welcher ein Bestandteil eines Lastmanagementsystem ist, publiziert wurde. Dies kann zu einer Ressourcenschonung führen. Wenn keine Berechnungen für die Verarbeitungseinheit durchzuführen sind oder keine neue Statusnachricht in einem ersten Thema veröffentlicht wurde, kann sich die Verarbeitungseinheit in einem Energiesparmodus, also Standby-Modus befinden. Es ist ebenso möglich, dass die Verarbeitungseinheit, wenn diese als Computerprogramm-Instanz ausgeführt ist, nach der Durchführung von Berechnungen eliminiert bzw. gelöscht wird.

Vorteilhaft ist es zudem, wenn durch den Nachrichtenvermittler die Zuordnung der zumindest einen Ladestation und/oder des zumindest einen Ladepunkts zu einem zweiten Thema erfolgt, um über das zweite Thema den Befehl für die Ladestation und/oder den Ladepunkt zu vermitteln. Das zweite Thema eines Ladepunkts erhält entsprechend Befehle, welche von der Verarbeitungseinheit über den Nachrichtenvermittler an den Ladepunkt übertragen werden sollen. Diese Befehle umfassen insbesondere die maximal erlaubte Ladeleistung, welche an einem Ladepunkt bezogen werden darf. Die Verarbeitungseinheit kann die Befehle zu dem zweiten Thema veröffentlichen. Eine Ladestation, welche einen bestimmten Ladepunkt umfasst, kann das zweite Thema des bestimmten Ladepunkts abonnieren, um die zugehörigen Befehle zu erhalten.

Ein weiterer Vorteil im Rahmen der Erfindung ist erzielbar, wenn eine Umkonfiguration des Lastmanagementsystems dadurch erfolgt, dass eine Verarbeitungseinheit und/oder eine Konfigurationseinheit die Zuordnung der zumindest einen Ladestation und/oder des zumindest einen Ladepunkts zu dem wenigstens einen Thema nachträglich verändert. Hierbei kann das Lastmanagement einfach umkonfiguriert werden, in dem die Verarbeitungseinheit Themen von anderen Ladestationen bzw. Ladepunkten abonniert und/oder auf anderen Themen die dazugehörigen Befehle veröffentlicht.

Außerdem kann es im Rahmen der Erfindung von Vorteil sein, dass verschiedene Befehle für das Lastmanagement vorgesehen sind, und ein weiterer Befehl vorgesehen ist, um das Lastmanagement vorübergehend zu deaktivieren, sodass durch diesen Befehl der Ladepunkt aus dem Lastmanagementsystem entfernt wird. Vorteilhafterweise hat jeder Ladepunkt automatisch "sein" zweites Thema abonniert und es existiert ein besonderer Befehl, welcher angibt, dass sich ein Ladepunkt nicht in einem Lastmanagementsystem befindet, oder, dass ein Lastmanagementsystem mit eben diesem Ladepunkt startet oder endet. Dieser besondere Befehl kann beispielsweise von der Verarbeitungseinheit oder von einem Betreiber eines Lastmanagementsystem veröffentlicht werden. Hierdurch kann jeder Ladepunkt selbst erkennen, ob sich der Ladepunkt gerade in einem Lastmanagementsystem befindet. Dies macht vorteilhafterweise die Konfiguration eines Lastmanagement einfach, weil die Konfiguration eines Lastmanagementsystems nicht lokal in den einzelnen Ladepunkten durchgeführt werden muss.

Es kann weiter möglich sein, dass der Ladepunkt einen Status zu einem ersten Thema veröffentlicht, um seinen Status für eine Verarbeitungseinheit mitzuteilen, wobei die Veröffentlichung nur dann erfolgt, wenn der Ladepunkt Teil des Lastmanagementsystems ist. In anderen Worten veröffentlicht jeder Ladepunkt nur Informationen auf seinem ersten Thema, wenn sich der jeweilige Ladepunkt in einem Lastmanagementsystem befindet. Die Verwendung dieser Bedingung für die Veröffentlichung hat den Vorteil, dass ein Datenverkehr reduziert werden kann, weil nur eine Information zu einem ersten Thema übermittelt wird, wenn ein Ladepunkt derzeit ein Teil eines Lastmanagementsystem ist.

Ferner können sowohl die Verarbeitungseinheit als auch der Nachrichtenvermittler, also Message Broker, auf unterschiedlichen Instanzen und/oder Geräten durchgeführt werden. Beispielsweise kann sowohl die Verarbeitungseinheit als auch der Nachrichtenvermittler in einer Server-Infrastruktur als einzelne Instanz ausgeführt werden. Es ist aber auch möglich, dass bspw. nur der Nachrichtenvermittler in einer lokalen Ladestation ausgeführt wird, wobei die Verarbeitungseinheit zeitgleich in einer Server-Infrastruktur ausgeführt wird. Wenn das erfindungsgemäße Verfahren in einem lokalen Lastmanagement angewendet wird, kann sowohl die Verarbeitungseinheit als auch der Nachrichtenvermittler auf einer einzelnen Ladestation ausgeführt werden. Ferner kann der Ladepunkt bzw. die Ladestation, welche den zumindest einen Ladepunkt umfasst, selbst als eine Instanz in einer Server-Infrastruktur ausgeführt sein. Der Ladepunkt bzw. die Ladestation kann beispielsweise ein Ladestationsobjekt sein, welches insbesondere in der Druckschrift DE 10 2011 113 355 A1 beschreiben ist. Das heißt insbesondere, dass bei dieser Ausführungsform die "Intelligenz des Ladepunktes" (s. die vorgenannte Druckschrift in Absatz [0011] und [0017]) als eine Instanz in einer Server-Infrastruktur ausgebildet ist. Der Vorteil hierbei ist, dass die Kommunikation zwischen dem Nachrichtenvermittler und dem Ladestationsobjekt gänzlich in der Server-Infrastruktur durchgeführt werden kann. Dieser Umstand führt zu einer relativ einfachen Implementierung eines MQTT-Protokolls.

In einer weiteren Möglichkeit werden Befehle in einem zweiten Thema eines Ladepunkts nur in bestimmten Zeitabständen oder bei Eintritt von bestimmten Ereignissen (bspw., wenn ein neues Elektrofahrzeug an einem Ladepunkt angeschlossen wird oder wenn ein Ladevorgang an einem Ladepunkt vollendet wird) veröffentlicht. Ein solcher Zeitabstand kann beispielsweise 10 oder 15 Minuten sein. Der Vorteil an dieser Maßnahme ist, dass nicht in kurzen Zeitabständen die Ladeleistungen von Ladepunkten verändert wird. Dies führt zu weniger Änderungen im Betrieb des Energieversorgungsnetzes. Daher ist diese Maßnahme netzdienlich.

Gemäß einem weiteren Vorteil kann vorgesehen sein, dass eine Verarbeitungseinheit vorgesehen ist, und für den zumindest einen Ladepunkt jeweils die nachfolgenden Schritte durchgeführt werden:
- Veröffentlichen eines Status des Ladepunkts zu einem zugehörigen ersten Thema, wobei der Ladepunkt dem ersten Thema zugeordnet sein kann und/oder umgekehrt,
- Abonnieren des ersten Themas durch die Verarbeitungseinheit, um den veröffentlichten Status auszuwerten,
- Veröffentlichen eines Befehls zu einem zweiten Thema in Abhängigkeit von der Auswertung, wobei der Ladepunkt dem zweiten Thema zugeordnet sein kann und/oder umgekehrt,
- Abonnieren des zweiten Themas durch den Ladepunkt, um den veröffentlichten Befehl umzusetzen,
wobei vorzugsweise das Veröffentlichen und/oder Abonnieren bei dem Nachrichtenvermittler erfolgt. Die vorgenannten Schritte können dabei auch durch zumindest ein Computerprogramm ausgeführt werden. Die Reihenfolge der vorgenannten Schritte ist ggf. nicht explizit festgelegt. Es ist beispielsweise möglich, dass zunächst die Abonnements-Schritte durchgeführt werden und anschließend die Veröffentlichungs-Schritte. Alternativ können die Schritte in der angegebenen Reihenfolge durchgeführt werden.

Ebenfalls Gegenstand der Erfindung ist ein Lastmanagementsystem für zumindest eine Ladestation zur Aufladung von Elektrofahrzeugen, aufweisend:
- zumindest einen, insbesondere elektrischen, Ladepunkt der zumindest einen Ladestation, wobei insbesondere der zumindest eine Ladepunkt jeweils als eine Schnittstelle für die Aufladung ausgeführt ist,
- zumindest einen, insbesondere elektronischen, Nachrichtenvermittler für eine Zuordnung der zumindest einen Ladestation und/oder des zumindest einen Ladepunkts jeweils zu wenigstens einem zugehörigen Thema, um wenigstens einen Befehl für ein Lastmanagement in Abhängigkeit von der Zuordnung an die Ladestation zu vermitteln.
Damit bringt das erfindungsgemäße Lastmanagementsystem die gleichen Vorteile mit sich, wie sie ausführlich mit Bezug auf ein erfindungsgemäßes Verfahren beschrieben worden sind. Zudem kann das Lastmanagementsystem geeignet sein, durch ein erfindungsgemäßes Verfahren betrieben zu werden.

Ebenfalls Gegenstand der Erfindung ist ein Computerprogramm, umfassend Programmbefehle, die bei der Ausführung des Computerprogramms durch eine Ladestation zur Aufladung von Elektrofahrzeugen die Ladestation veranlassen, zumindest ein Thema bei einem Nachrichtenvermittler zu abonnieren, um durch das Abonnement wenigstens einen bei dem Nachrichtenvermittler veröffentlichten Befehl für ein Lastmanagement zu empfangen. Damit bringt das erfindungsgemäße Computerprogramm die gleichen Vorteile mit sich, wie sie ausführlich mit Bezug auf ein erfindungsgemäßes Verfahren beschrieben worden sind. Zudem kann das Computerprogramm geeignet sein, die Schritte eines erfindungsgemäßen Verfahrens zumindest teilweise auszuführen. Ferner kann die Ladestation gemäß einer Ladestation eines erfindungsgemäßen Lastmanagementsystems ausgebildet sein.

Es kann ferner vorgesehen sein, dass die Ladestation anhand der empfangenen Befehle eine Leistung eines Ladepunktes begrenzt. Insbesondere wird die Leistung desjenigen Ladepunktes begrenzt, welcher dem Thema des Befehls zugeordnet ist. Dabei kann der Befehl bspw. eine elektrische Maximalleistung angeben, welche der Ladestation bzw. dem Ladepunkt zur Verfügung stehen darf. Auf diese Weise kann das Lastmanagement bereitgestellt werden.

Vorteilhafterweise kann im Rahmen der Erfindung vorgesehen sein, dass die Programmbefehle bei der Ausführung des Computerprogramms durch die Ladestation diese veranlassen:
- einen Status zumindest eines Ladepunkts der Ladestation jeweils zu einem ersten Thema über den Nachrichtenvermittler zu veröffentlichen,
- das Abonnieren des Themas in der Form eines zweiten Themas für jeden Ladepunkt durchzuführen, dessen Status veröffentlicht wird, um das Lastmanagement anhand des Status durchzuführen.

Ebenfalls Gegenstand der Erfindung ist ein, vorzugsweise nicht-flüchtiges, Computerprogramm, insbesondere Computerprogrammprodukt, umfassend Programmbefehle, die bei der Ausführung des Computerprogramms durch einen Nachrichtenvermittler diesen veranlassen, eine Zuordnung von zumindest einer Ladestation zur Aufladung von Elektrofahrzeugen und/oder zumindest eines Ladepunkts der zumindest einen Ladestation jeweils zu wenigstens einem zugehörigen Thema durchzuführen, um wenigstens einen Befehl für ein Lastmanagement in Abhängigkeit von der Zuordnung an die Ladestation zu vermitteln. Damit bringt das erfindungsgemäße Computerprogramm die gleichen Vorteile mit sich, wie sie ausführlich mit Bezug auf ein erfindungsgemäßes Verfahren beschrieben worden sind. Zudem kann das Computerprogramm geeignet sein, die Schritte eines erfindungsgemäßen Verfahrens zumindest teilweise auszuführen. Ferner kann der Nachrichtenvermittler gemäß einem Nachrichtenvermittler eines erfindungsgemäßen Lastmanagementsystems ausgebildet sein.

Ebenfalls Gegenstand der Erfindung ist ein, vorzugsweise nicht-flüchtiges, Computerprogramm, insbesondere Computerprogrammprodukt, umfassend Programmbefehle, die bei der Ausführung des Computerprogramms durch eine Verarbeitungseinheit diese veranlassen, bei einem Nachrichtenvermittler zumindest einen Befehl für ein Lastmanagement zu einem Thema zu veröffentlichen. Damit bringt das erfindungsgemäße Computerprogramm die gleichen Vorteile mit sich, wie sie ausführlich mit Bezug auf ein erfindungsgemäßes Verfahren beschrieben worden sind. Zudem kann das Computerprogramm geeignet sein, die Schritte eines erfindungsgemäßen Verfahrens zumindest teilweise auszuführen. Ferner kann die Verarbeitungseinheit gemäß einer Verarbeitungseinheit eines erfindungsgemäßen Lastmanagementsystems ausgebildet sein.

Ferner kann es im Rahmen der Erfindung vorgesehen sein, dass die Programmbefehle bei der Ausführung des Computerprogramms durch die Verarbeitungseinheit diese veranlassen, zumindest ein erstes Thema bei dem Nachrichtenvermittler zu abonnieren, um einen veröffentlichten Status eines Ladepunkts einer Ladestation zur Aufladung von Elektrofahrzeugen zu empfangen und auszuwerten, und in Abhängigkeit von der Auswertung den Befehl für das Lastmanagement zu einem zweiten Thema zu veröffentlichen.

Es kann vorgesehen sein, dass die Computerprogramme jeweils als Computerprogrammprodukte ausgeführt sind. Ferner kann es möglich sein, dass die Computerprogramme jeweils in einem nicht-flüchtigen Datenspeicher nicht-flüchtig gespeichert sind, um durch einen Prozessor ausgelesen zu werden, welcher die Programmbefehle ausführt. Die Computerprogramme können jeweils nicht-flüchtig und/oder nicht-transient ausgeführt sein. Die jeweiligen Programmbefehle können dazu ausgeführt sein, bei der Ausführung der Computerprogramme zueinander komplementäre Funktionen bereitzustellen, um gemeinsam die Schritte eines erfindungsgemäßen Verfahrens auszuführen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen jeweils schematisch:
- Fig. 1: ein erfindungsgemäßes Lastmanagementsystems zur Visualisierung eines erfindungsgemäßen Verfahrens,
- Fig. 2: eine weitere Darstellung zur Visualisierung eines erfindungsgemäßen Verfahrens.

In den nachfolgenden Figuren werden für die gleichen technischen Merkmale auch von unterschiedlichen Ausführungsbeispielen die identischen Bezugszeichen verwendet.

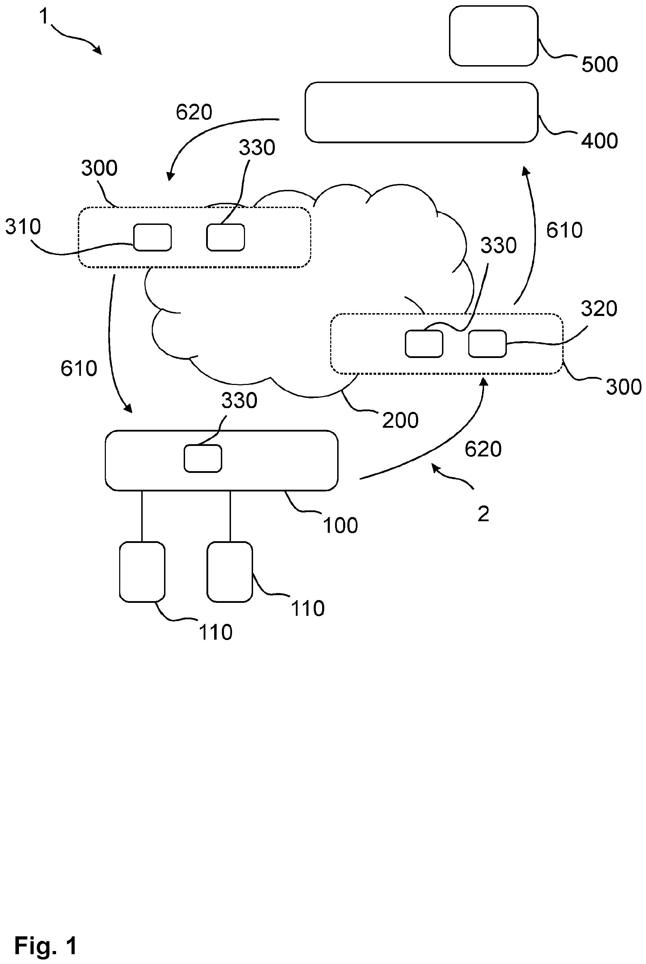

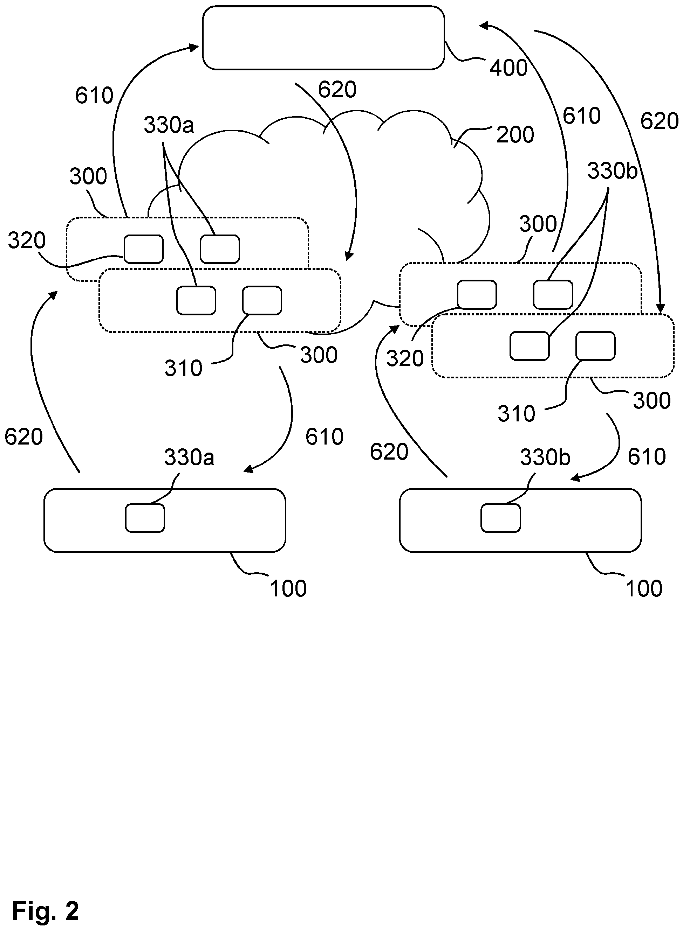

In Figur 1 und 2 ist jeweils ein erfindungsgemäßes Lastmanagementsystem 1 gezeigt, in welchem Kommunikationsteilnehmer 100, 200, 300, 400, 500 eines Kommunikationssystems 2 miteinander für einen Datenaustausch kommunikationstechnisch verbunden sind. Ferner dienen die Figuren 1 und 2 zur Visualisierung eines erfindungsgemäßen Verfahrens zur Bereitstellung eines Lastmanagementsystems 1.

Das Lastmanagementsystem 1 kann zum Lastmanagement für zumindest eine Ladestation 100 dienen. In Figur 1 ist exemplarisch nur eine Ladestation 100 gezeigt, in Figur 2 sind zur weiteren Verdeutlichung der Funktionsweise zwei Ladestationen 100 dargestellt, wobei die Erfindung nicht auf diese Anzahl beschränkt ist. Die Ladestation 100 kann einen oder mehrere Ladepunkte 110 aufweisen, um eine Aufladung von Elektrofahrzeugen zu ermöglichen. Der wenigstens eine Ladepunkt 110 kann dabei jeweils als eine Schnittstelle für die Aufladung bereitgestellt sein. Ferner kann ein Nachrichtenvermittler 200 für eine Zuordnung der zumindest einen Ladestation 100 und/oder des zumindest einen Ladepunkts 110 jeweils zu wenigstens einem zugehörigen Thema 300 bereitgestellt sein. Auf diese Weise kann wenigstens ein Befehl 310 für ein Lastmanagement in Abhängigkeit von der Zuordnung an die Ladestation 100 vermittelt werden. Es ist dargestellt, dass der Befehl 310 durch eine Verarbeitungseinheit 400 zu dem Thema 300 veröffentlicht (siehe Bezugszeichen 620) und das Thema 300 zum Empfangen des Befehls 310 durch die Ladestation 100 bzw. den Ladepunkt 110 abonniert (siehe Bezugszeichen 610) werden kann.

Um die Zuordnung der zumindest einen Ladestation 100 und/oder des zumindest einen Ladepunkts 110 jeweils zu wenigstens einem zugehörigen Thema 300 zu ermöglichen, können die Ladestationen 100 bzw. Ladepunkte 110 jeweils eine Kennung 330 aufweisen. Unterschiedliche Ladestationen 100 bzw. Ladepunkte 110 weisen dabei unterschiedliche Kennungen 330 auf. In Figur 2 sind beispielhaft eine erste Kennung 330a und eine zweite Kennung 330b dargestellt, welche sich voneinander unterscheiden. Die Kennung 330 kann als eine Ladepunktkennung ausgeführt sein. Zur Vereinfachung ist in den Figuren für die Ladestation 100 nur eine Kennung 330 dargestellt, auch wenn ggf. jeder Ladepunkt 110 seine eigene Kennung 330 aufweisen kann. Die Kennung 330 ermöglicht eine eindeutige Identifizierung des Ladepunkts 110.

Es können ein oder mehrere erste Themen und ein oder mehrere zweite Themen vorgesehen sein. Die unterschiedlichen Themen können dabei auch als unterschiedliche Kategorien aufgefasst werden. Die beiden in Figur 2 dargestellten Ladestationen 100 und/oder die zur Vereinfachung nicht explizit dargestellten Ladepunkte 110 der Ladestationen 100 können stets ein eigenes zweites Thema, d. h. ein befehlsbezogenes Thema, abonniert haben. Dieses Abonnement kann insbesondere zu jeder Zeit bestehen, unabhängig davon, ob sich ein Ladepunkt in einem Lastmanagementsystem befindet oder nicht. Ferner kann es vorgesehen sein, dass die jeweilige Ladestation 100 und/oder der jeweilige Ladepunkt 110 zu einem zugehörigen ersten Thema 300, einem statusbezogenen Thema 300, den eigenen Status 320 veröffentlichen kann.

Es sei zunächst angenommen, dass kein Lastmanagementsystem 1 eingerichtet ist. Dann kann ein aktueller Befehl 310 in jedem zweiten Thema 300 "Kein Lastmanagement" sein. Durch diesen besonderen Befehl 310 kann der Ladepunkt 110 feststellen, dass er sich nicht in einem Lastmanagementsystem 1 befindet. Zu diesem Zeitpunkt kann ein jeder Ladepunkt 110 einen Status zu seinem ersten Thema 300 veröffentlichen. Dies ist jedoch nicht zwingend erforderlich.

Wenn ein Betreiber ein Lastmanagementsystem 1 mit den zwei Ladepunkten 110 einrichten möchte, so kann dies bspw. durch eine Konfigurationseinheit 500 durchgeführt werden, bspw. über eine (nicht dargestellte) Benutzeroberfläche einer Internetseite. Der Betreiber braucht dabei nicht jeden einzelnen Ladepunkt 110 auszuwählen und diesem mitteilen, dass dieser sich in einem Lastmanagementsystem 1 befinden soll. Sobald der Betreiber das Lastmanagement eingerichtet hat, kann die Verarbeitungseinheit 400 oder die Konfigurationseinheit 500 einen weiteren Befehl 310 zu dem zweiten Thema 300 der Ladepunkte 110 veröffentlichen. Dieser weitere Befehl 310 kann bspw. "Start Lastmanagement" sein. Durch diesen weiteren Befehl 310 kann die Ladestation 100 in Kenntnis gesetzt werden, dass ein Lastmanagementsystem 1 starten soll. Spätestens zu diesem Zeitpunkt wird eine Ladestation 100 ihren Status 320, d. h. eine Information über ihren Zustand, auf den jeweiligen ersten Topic veröffentlichen.

Wenn sich die Ladepunkte 110 in einem Lastmanagementsystem 1 befinden, können die Ladepunkte 110 jeweils ihren Status 320 in ihrem ersten Thema 300 veröffentlichen. Der Status 320 kann insbesondere folgende Informationen umfassen:
1) Ist ein Elektrofahrzeug an dem Ladepunkt 110 angeschlossen und/oder ist das Elektrofahrzeug ladebereit?
2) Aktueller Ladestrom bzw. aktuelle Ladeleistung.

Der Status 320 kann insbesondere dann veröffentlicht werden, falls eine Änderung des Zustands eintritt. Dies ist bspw. der Fall, wenn ein neues Elektrofahrzeug an einen Ladepunkt 110 angeschlossen wird. Eine solche Veröffentlichung 620 ist dann ereignisbasiert.

Der Status 320 zu 2) kann in periodischen Zeitintervallen (bspw. alle 5, 10 oder 15 Minuten) veröffentlicht werden.

Nachdem der Status 320 in einem ersten Thema 300 veröffentlicht wurde, wird der Status 320 zu einer Verarbeitungseinheit 400 übertragen, da die Verarbeitungseinheit 400 das erste Thema 300 der Ladepunkte 110 in einem Lastmanagementsystem 1 abonniert hat. Daraufhin kann die Verarbeitungseinheit 400 einen Lastmanagement-Algorithmus durchführen. Ein solcher Lastmanagement-Algorithmus kann insbesondere eine Gleichverteilung einer maximal verfügbaren Leistung umfassen. Das heißt, dass alle Elektrofahrzeuge, welche in einem Lastmanagementsystem 1 geladen werden, die gleiche Ladeleistung beziehen. Der jeweilige Lastmanagement-Algorithmus kann aber auch bspw. deutlich komplexer ausgestaltet sein. Die Erfindung ist dabei nicht auf einen konkreten Lastmanagement-Algorithmus beschränkt.

Nachdem die Verarbeitungseinheit 400 den Lastmanagement-Algorithmus ausgeführt hat, können die daraus resultierenden Befehle 310 in den jeweiligen zweiten Themen der Ladepunkte 110 veröffentlicht werden. Die daraus resultierenden Befehle 310 können insbesondere eine maximal erlaubte Ladeleistung des jeweiligen Ladepunkts 110 umfassen. Insbesondere kann die Verarbeitungseinheit 400 alle resultierende Befehle 310 einer Ausführung (Berechnung) fast zeitgleich veröffentlichen. Dies führt vorteilhafterweise dazu, dass alle Ladepunkte 110 auch zeitgleich ihren Befehl 310 erhalten können und es keinen Versatz bei dem Erhalt der Befehle 310 gibt.

Nachdem die resultierenden Befehle 310 von der Verarbeitungseinheit 400 veröffentlicht wurden, werden diese durch das jeweilige Abonnement des zweiten Themas 300 an die Ladepunkte 110 übertragen. Daraufhin kann der Ladepunkt 110 bzw. die Ladestation die Weisung des resultierenden Befehls 310 ausführen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Lastmanagementsystem
- 2: Kommunikationssystem

- 100: Ladestation
- 110: Ladepunkt

- 200: Nachrichtenvermittler

- 300: Thema
- 310: Befehl

- 320: Status
- 330: Kennung

- 330a: erste Kennung
- 330b: zweite Kennung

- 400: Verarbeitungseinheit

- 500: Konfigurationseinheit

- 610: Abonnieren

- 620: Veröffentlichen

## Patentansprüche

1. Verfahren zur Bereitstellung eines Lastmanagementsystems (1) für zumindest eine Ladestation (100) zur Aufladung von Elektrofahrzeugen,
wobei die nachfolgenden Schritte durchgeführt werden:
- Bereitstellen zumindest eines Ladepunkts (110) der zumindest einen Ladestation (100), wobei der zumindest eine Ladepunkt (110) jeweils als eine Schnittstelle für die Aufladung ausgeführt ist,
- Bereitstellen eines Nachrichtenvermittlers (200) für eine Zuordnung der zumindest einen Ladestation (100) und/oder des zumindest einen Ladepunkts (110) jeweils zu wenigstens einem zugehörigen Thema (300), um wenigstens einen Befehl (310) für ein Lastmanagement in Abhängigkeit von der Zuordnung an die Ladestation (100) zu vermitteln.

2. Verfahren nach Anspruch 1,
**dadurch gekennzeichnet,**
**dass** mehrere Ladepunkte (110) bereitgestellt werden, insbesondere mindestens zwei Ladestationen (100) mit jeweils mindestens zwei Ladepunkten (110), wobei durch den Nachrichtenvermittler (200) für jeden der Ladepunkte (110) ein eigenes zugehöriges Thema (300) bereitgestellt und dem jeweiligen Ladepunkt (110) zugeordnet wird,
und **dass** eine Verarbeitungseinheit (400) bereitgestellt wird, wobei durch die Verarbeitungseinheit (400) der wenigstens eine Befehl (310) jeweils einem der Themen (300) zugeordnet wird, um den jeweiligen Befehl (310) zu diesem Thema (300) zu veröffentlichen, wobei der veröffentlichte Befehl (310) über den Nachrichtenvermittler (200) an diejenige Ladestation (100) übertragen wird, welche den dem Thema (300) zugeordneten Ladepunkt (110) aufweist, um diesen Ladepunkt (110) entsprechend dem veröffentlichten Befehl (310) zu betreiben.

3. Verfahren nach Anspruch 1 oder 2,
**dadurch gekennzeichnet,**
**dass** die zumindest eine Ladestation (100) und/oder der zumindest eine Ladepunkt (110), und insbesondere eine Verarbeitungseinheit (400), jeweils als Kommunikationsteilnehmer eines Kommunikationssystems (2) ausgeführt sind, auf denen jeweils eine oder mehrere Publisher-Anwendungen und/oder eine oder mehrere Subscriber-Anwendungen ausgeführt werden.

4. Verfahren nach Anspruch 2 oder 3,
**dadurch gekennzeichnet,**
**dass** durch die Verarbeitungseinheit (400) der wenigstens eine Befehl (310) zu dem wenigstens einen Thema (300) veröffentlicht wird, und als Reaktion auf die Veröffentlichung der Nachrichtenvermittler (200) den wenigstens einen veröffentlichten Befehl (310) an diejenige Ladestation (100) überträgt, die und/oder deren Ladepunkt (110) auf dieses Thema (300) abonniert ist.

5. Verfahren nach einem der vorhergehenden Ansprüche,
**dadurch gekennzeichnet,**
**dass** eine Konfigurationseinheit (500) bereitgestellt wird, um die Zuordnung der zumindest einen Ladestation (100) und/oder des zumindest einen Ladepunkts (110) zu dem zugehörigen Thema (300) initial durchzuführen.

6. Verfahren nach einem der vorhergehenden Ansprüche,
**dadurch gekennzeichnet,**
**dass** durch den Nachrichtenvermittler (200) die Zuordnung der zumindest einen Ladestation (100) und/oder des zumindest einen Ladepunkts (110) zu einem ersten Thema (300) erfolgt, um über das erste Thema (300) einen Status (320) der Ladestation (100) und/oder des Ladepunkts (110) zu vermitteln, insbesondere dass eine Verarbeitungseinheit (400) bereitgestellt wird, welche den Befehl (310) zugeordnet zu einem zweiten Thema (300) veröffentlicht, wobei die Veröffentlichung des Befehls (310) durch die vorangegangene Vermittlung des Status (320) getriggert wird.

7. Verfahren nach einem der vorhergehenden Ansprüche,
**dadurch gekennzeichnet,**
**dass** durch den Nachrichtenvermittler (200) die Zuordnung der zumindest einen Ladestation (100) und/oder des zumindest einen Ladepunkts (110) zu einem zweiten Thema (300) erfolgt, um über das zweite Thema den Befehl (310) für die Ladestation (100) und/oder den Ladepunkt (110) zu vermitteln, und/oder dass eine Umkonfiguration des Lastmanagementsystems (1) dadurch erfolgt, dass eine Verarbeitungseinheit (400) und/oder eine Konfigurationseinheit (500) die Zuordnung der zumindest einen Ladestation (100) und/oder des zumindest einen Ladepunkts (110) zu dem wenigstens einen Thema (300) nachträglich verändert

8. Verfahren nach einem der vorhergehenden Ansprüche,
**dadurch gekennzeichnet,**
**dass** verschiedene Befehle (310) für das Lastmanagement vorgesehen sind, und ein weiterer Befehl (310) vorgesehen ist, um das Lastmanagement vorübergehend zu deaktivieren, sodass durch diesen Befehl (310) der Ladepunkt (110) aus dem Lastmanagementsystem (1) entfernt wird, und/oder dass der Ladepunkt (110) einen Status (320) zu einem ersten Thema (300) veröffentlicht, um seinen Status (320) für eine Verarbeitungseinheit (400) mitzuteilen, wobei die Veröffentlichung nur dann erfolgt, wenn der Ladepunkt Teil des Lastmanagementsystems (1) ist.

9. Verfahren nach einem der vorhergehenden Ansprüche,
**dadurch gekennzeichnet,**
**dass** eine Verarbeitungseinheit (400) vorgesehen ist, und für den zumindest einen Ladepunkt (110) jeweils die nachfolgenden Schritte durchgeführt werden:
- Veröffentlichen eines Status (320) des Ladepunkts (110) zu einem zugehörigen ersten Thema (300),
- Abonnieren des ersten Themas (300) durch die Verarbeitungseinheit (400), um den veröffentlichten Status (320) auszuwerten,
- Veröffentlichen eines Befehls (310) zu einem zweiten Thema (300) in Abhängigkeit von der Auswertung,
- Abonnieren des zweiten Themas (300) durch den Ladepunkt (110), um den veröffentlichten Befehl (310) umzusetzen,
wobei das Veröffentlichen und/oder Abonnieren bei dem Nachrichtenvermittler (200) erfolgt.

10. Lastmanagementsystem (1) für zumindest eine Ladestation (100) zur Aufladung von Elektrofahrzeugen, wobei die nachfolgenden Komponenten vorgesehen sind:
- zumindest einen Ladepunkt (110) der zumindest einen Ladestation (100), wobei der zumindest eine Ladepunkt (110) jeweils als eine Schnittstelle für die Aufladung ausgeführt ist,
- zumindest einen Nachrichtenvermittler (200) für eine Zuordnung der zumindest einen Ladestation (100) und/oder des zumindest einen Ladepunkts (110) jeweils zu wenigstens einem zugehörigen Thema (300), um wenigstens einen Befehl (310) für ein Lastmanagement in Abhängigkeit von der Zuordnung an die Ladestation (100) zu vermitteln.

11. Lastmanagementsystem (1) nach Anspruch 10,
**dadurch gekennzeichnet,**
**dass** ein Verfahren nach einem der Ansprüche 1 bis 9 durch die Komponenten ausgeführt wird.

12. Computerprogramm, umfassend Programmbefehle, die bei der Ausführung des Computerprogramms durch eine Ladestation (100) zur Aufladung von Elektrofahrzeugen die Ladestation (100) veranlassen, zumindest ein Thema (300) bei einem Nachrichtenvermittler (200) zu abonnieren, um durch das Abonnement wenigstens einen bei dem Nachrichtenvermittler (200) veröffentlichten Befehl (310) für ein Lastmanagement zu empfangen.

13. Computerprogramm nach Anspruch 12,
**dadurch gekennzeichnet,**
**dass** die Programmbefehle bei der Ausführung des Computerprogramms durch die Ladestation (100) diese veranlassen:
- einen Status zumindest eines Ladepunkts (110) der Ladestation (100) jeweils zu einem ersten Thema (300) über den Nachrichtenvermittler (200) zu veröffentlichen,
- das Abonnieren des Themas (300) in der Form eines zweiten Themas (300) für jeden Ladepunkt (110) durchzuführen, dessen Status veröffentlicht wird, um das Lastmanagement anhand des Status durchzuführen.

14. Computerprogramm, umfassend Programmbefehle, die bei der Ausführung des Computerprogramms durch einen Nachrichtenvermittler (200) diesen veranlassen, eine Zuordnung von zumindest einer Ladestation (100) zur Aufladung von Elektrofahrzeugen und/oder zumindest eines Ladepunkts (110) der zumindest einen Ladestation (100) jeweils zu wenigstens einem zugehörigen Thema (300) durchzuführen, um wenigstens einen Befehl (310) für ein Lastmanagement in Abhängigkeit von der Zuordnung an die Ladestation (100) zu vermitteln.

15. Computerprogramm, umfassend Programmbefehle, die bei der Ausführung des Computerprogramms durch eine Verarbeitungseinheit (400) diese veranlassen, bei einem Nachrichtenvermittler (200) zumindest einen Befehl (310) für ein Lastmanagement zu einem Thema (300) zu veröffentlichen, wobei insbesondere die Programmbefehle bei der Ausführung des Computerprogramms durch die Verarbeitungseinheit (400) diese veranlassen, zumindest ein erstes Thema (300) bei dem Nachrichtenvermittler (200) zu abonnieren, um einen veröffentlichten Status eines Ladepunkts (110) einer Ladestation (100) zur Aufladung von Elektrofahrzeugen zu empfangen und auszuwerten, und in Abhängigkeit von der Auswertung den Befehl (310) für das Lastmanagement zu einem zweiten Thema (300) zu veröffentlichen.
